**Europäisches Patentamt**

(19) **European Patent Office**

**Office européen des brevets**

(11) Veröffentlichungsnummer: **0 108 871**
**B1**

# (12) EUROPÄISCHE PATENTSCHRIFT

(45) Veröffentlichungstag der Patentschrift:
**20.11.86**

(21) Anmeldenummer: **83108134.4**

(22) Anmeldetag: **17.08.83**

(51) Int. Cl.⁴: **B 23 K 13/02**

(54) **Verfahren und Vorrichtung zur Überwachung und/oder Regelung des Schweissstromes beim Hochfrequenzwiderstandspressschweissen von Längsnahtrohren.**

(30) Priorität: **20.10.82 DE 3238766**

(43) Veröffentlichungstag der Anmeldung:
**23.05.84 Patentblatt 84/21**

(45) Bekanntmachung des Hinweises auf die Patenterteilung:
**20.11.86 Patentblatt 86/47**

(84) Benannte Vertragsstaaten:
**AT BE CH DE FR GB IT LI NL SE**

(56) Entgegenhaltungen:
**DE - A - 2 826 986**
**DE - B - 2 149 538**
**US - A - 3 573 416**

**"Soviet Inventions Illustrated", Week E 13, 2 May 1982, Section M 23 x 24 P 51 P 55**
**"Soviet Inventions Illustrated", Week D 27, 12 August 1981, Section M 23 x 24 P 55**

(73) Patentinhaber: **Hoesch Aktiengesellschaft, Eberhardstrasse 12, D-4600 Dortmund 1 (DE)**

(72) Erfinder: **Kliesch, Wilfried, Dipl.-Ing., Am Erbsenbach 7, D-5860 Iserlohn 7 (DE)**
Erfinder: **Koch, Friedrich-Otto, Dipl.-Ing., Auf der Bleiche 44, D-4750 Unna-Massen (DE)**
Erfinder: **Wahl, Hans-Jürgen, Dipl.-Phys., Breul 16a, D-4400 Münster (DE)**
Erfinder: **Krebs, Rolf, Dipl.-Ing., Karl-Mosterts-Strasse 5, D-4700 Hamm 1 (DE)**
Erfinder: **Schorr, Peter, Dipl.-Ing., Am Roggenkamp 39, D-4400 Münster (DE)**
Erfinder: **Strauch, Heinz, Am grossen Feld 28, D-5800 Hagen-Emst (DE)**

Beschreibung

Die Erfindung betrifft ein Verfahren zur Überwachung und/oder Regelung des Schweissstromes bei der Hochfrequenz-Schweissung von Längsnahtrohren durch Erfassung der durch den Schweissstrom erzeugten Magnetfelder mittels Sonden, deren Signale ausgewertet werden.

Dieses Verfahren wird angewandt in einer Vorrichtung, bestehend aus einem Hochfrequenz-Schweissgenerator mit konduktiver oder induktiver Stromübertragungsvorrichtung, einem Schweissstromsteller, magnetfeldempfindlichen Sonden, Messgeräten für die Sondensignale, Soll-Istwert-Vergleicher und einer Regeleinrichtung.

Aus der SU-A-835 679 ist bekannt, mit Sonden Magnetfelder, die von Schweissströmen beim Längsnahtrohrschweissen stammen, zu messen, die Sondensignale auszuwerten und daraus Stellsignale für eine Schweissstromquelle abzuleiten. Nachteilig ist bei dieser Vorrichtung die Art der Erfassung der Magnetfelder und die entsprechende Sondenanordnung. Es kann nur zwischen integralen Magnetfeldern an zwei Punkten in Axialrichtung des Rohres eine Differenzmessung erfolgen; deren effektive Ursache aus unterschiedlichen Strömen in den Bandkanten wird nicht erkannt. Grenzwertgeber für Bandkanten-Schweissströme bzw. resultierende induzierte Spannungen in Magnetfeldsonden werden nicht offenbart.

Aus der US-PS 35 73 416 ist bekannt, die Schweissströme bei der HF-Schweissung von Längsnahtrohren hinter dem Schweisspunkt von aussen durch magnetische Messungen zu erfassen.

Dieses Verfahren hat den Nachteil, dass bei der Messung die Magnetfelder der zur Schweissvorrichtung führenden Stromkabel, die sich bei den üblichen Schweissfrequenzen von etwa 400 kHz nur unzureichend abschirmen lassen, stören. Gleiches gilt für Magnetfelder von in der näheren Umgebung eingesetzten Induktiv-Glühanlagen, wie z.B. Nahtnachglühanlagen für Rohre. Als besonders störend für die nur interessierende Erfassung des in den Bandkanten für den eigentlichen Erhitzungsvorgang fliessenden Stromes erweisen sich die bei der konduktiven und stärker noch bei der induktiven Stromeinkopplung in das Rohr entstehenden sogenannten Rohr-Rückenströme.

Von daher hat die Erfindung die Aufgabe, ein unkompliziertes Verfahren und eine Vorrichtung für die Überwachung und/oder Regelung des Schweissstromes in den Bandkanten vorzuschlagen, bei dem störende Einflüsse benachbarter Magnetfelder weitestgehend ausgeschaltet sind.

Die Aufgabe wird erfindungsgemäss durch die im Kennzeichen der Ansprüche 1 und 4 erfassten Merkmale gelöst. Weiterbildende Merkmale sind in den Unteransprüchen erfasst.

Effektiv wirksam für den Schweissprozess ist nur der in den Bandkanten des Schlitzrohres fliessende Schweissstrom. Aus diesem Grunde wird nur über ihn eine Aussage gewünscht, insbesondere, ob und wann er Schwankungen unterliegt. Diese werden dann zur Nachfolgeregelung der eingespeisten Schweissenergie verwertet.

Dies gelingt insbesondere durch Anbringen einer magnetfeldempfindlichen Sonde im Rohrinneren. Der Vorteil der Magnetfeldmessung im Rohrinneren besteht darin, dass das Rohr für die hohen Frequenzen des Schweissgenerators einen Faradaykäfig bildet. Hierdurch werden alle elektromagnetischen Störfelder, die sich ausserhalb des Rohres befinden, abgeschirmt. Ebenso können, infolge des Skineffektes, alle auf der äusseren Rohroberfläche fliessenden Ströme nicht nach innen dringen, abgesehen von den in den Bandkanten des Schweissspaltes fliessenden Strömen, die für den HF-Pressschweissprozess entscheidend sind. Somit kann man also auf der Rohrinnenseite fast störungsfrei die Magnetfelder des Schweissstromes messen.

Dabei ergibt sich noch der Vorteil, dass man durch Anbringen mehrerer auf das Magnetfeld der Schweissströme ausgerichteter Induktionsspulen als Sonden differenziertere Aussagen über den Schweissprozess, speziell über die Verteilung der Ströme im Rohr machen kann. Hinzu kommt als weiterer Vorteil, dass man beliebig kurze Schweissstromstörungen, wie sie z.B. infolge Kurzschlusses durch Späne denkbar sind, erfassen kann, was bei herkömmlichen Messmethoden nicht möglich ist. Solche kurzen Störungen können zwar nicht ausgeregelt werden, da auch der Regelkreis eine gewisse Trägheit hat, sie können jedoch mittels einer Markiereinrichtung ortsgetreu markiert oder durch Abspeichern in ein Schieberegister registriert und verfolgt oder aufgezeichnet werden.

Die Sonden werden zweckmässigerweise in der Mitte der Strecke zwischen Stromeinspeisepunkt (Induktionsspule oder HF-Kontakte) und Schweisspunkt (Zusammentreffen der Bandkanten des Schlitzrohres zwischen den Stauchrollen) direkt unter den Bandkanten im Magnetfeld der Bandkanten-Schweissströme angeordnet. Dort ist eine Störung durch Rohr-Rückenströme in der Regel nicht wahrnehmbar.

Bei der konduktiven HF-Schweissung werden die Sonden auf dem Trägerarm für das Schlitzrohr-Schwert bzw. die Schabeeinrichtung für den Innenschweisswulst angeordnet.

Im Falle der induktiven HF-Schweissung sollten die Sonden zweckmässigerweise auf der Oberfläche des einzusetzenden Impeders angebracht sein. Um Funktionsstörungen durch beschädigte Impeder auszuschalten, wird in Weiterbildung des Erfindungsgedankens der Impeder mit einer Induktionsschleife umwickelt und diese mit einer Anzeige- oder Meldevorrichtung für den Bedienungsmann gekoppelt, so dass der in die Schleife induzierte Strom überwacht werden kann. Beschädigungen oder Zerstörungen des Impeders können so sofort entdeckt werden.

Eine Irreführung der magnetfeldempfindlichen Sonde durch diese Störung kann somit vermieden werden.

Eine Änderung des Magnetfeldes erfolgt proportional zur Änderung des Schweissstromes in den Bandkanten.

Da eine Schweissstromänderung eine proportionale Temperaturänderung beim Schweissen zur Folge hat, ist dieses Messverfahren praktisch als Temperaturmessverfahren anwendbar.

Hier liegt die hervorragende Bedeutung für die Anwendung bei der HF-Rohrschweisstechnik, da alle bisher verwendeten Temperaturmessverfahren über Strahlungspyrometer wegen der Umwelt-Bedingungen am Schweisspunkt nicht die für eine optimale Schweissung erforderliche Genauigkeit aufweisen.

Anhand einiger schematischer Zeichnungen soll ein Ausführungsbeispiel näher erläutert werden.

Es zeigen

Fig. 1 die Situation an der HF-Schweissstation bei der Verschweissung der Bandkanten des Schlitzrohres zum Längsnahtrohr

Fig. 2 einen Teilschnitt quer zum Schlitzrohr in Höhe der Magnetfeld-Sonden

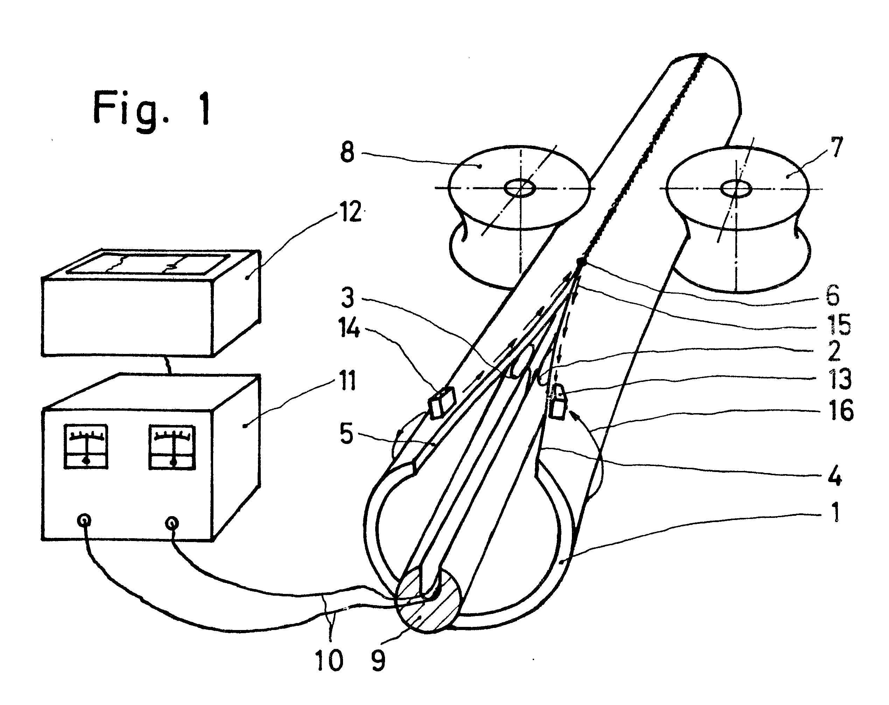

Ein Schlitzrohr 1 wird im Schweisspunkt 6 zum Längsnahtrohr pressgeschweisst. Der Schweissdruck wird über Stauchrollen 7, 8 aufgebracht (Fig. 1). Die Schweissenergie wird von einem nicht dargestellten Schweissgenerator über die Kontaktschuhe 13, 14 konduktiv in das Schlitzrohr 1 eingeleitet und fliesst infolge des Skineffektes als Schweissstrom 15 in den Bandkanten 4, 5 zum Schweisspunkt 6 und als Rückenstrom 16 um das Schlitzrohr 1.

Auf dem Trägerarm 9 ist zwischen den Kontaktschuhen 13 bzw. 14 und dem Schweisspunkt 6 nahe unter den Bandkanten 4 bzw. 5 im Inneren des Schlitzrohres 1 je eine Induktionsspule 2 bzw. 3 als magnetfeldempfindliche Sonde angeordnet. Die Zuleitungen 10 der Induktionsspulen 2, 3 werden getrennt aus dem Schlitzrohr 1 geführt, so dass man die in jeder Induktionsspule 2, 3 induzierte Spannung unabhängig über ein Messgerät 11 und einen Schreiber 12 auswerten kann.

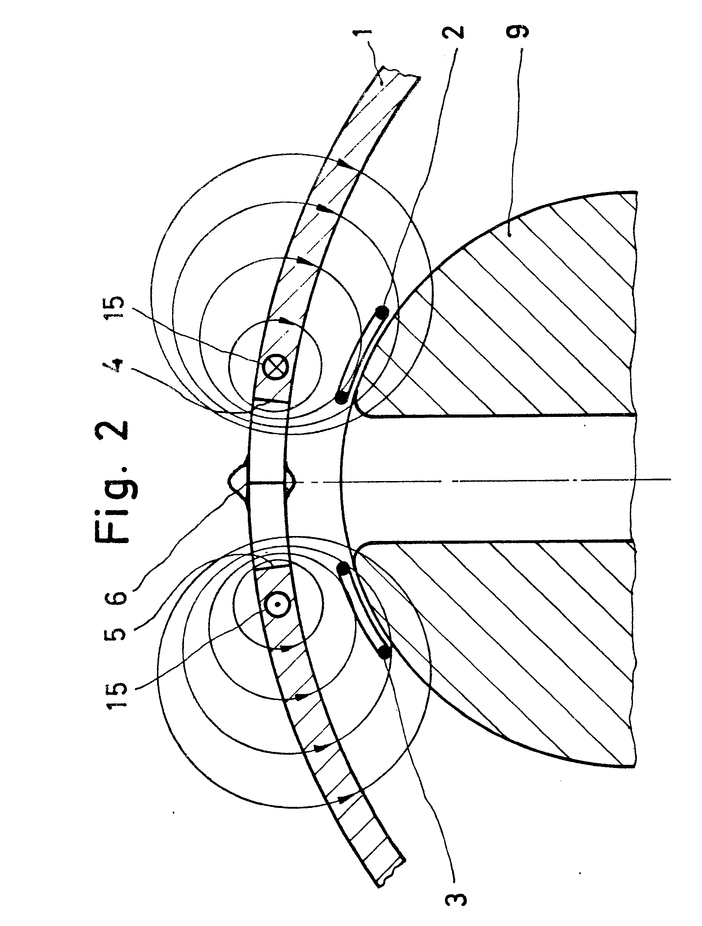

Fig. 2 zeigt in vergrösserter Ausführung die Ausbildung der entgegengesetzten Magnetfelder, die durch den Schweissstrom 15 in den Bandkanten 4 bzw. 5 des Schlitzrohres 1 erzeugt werden. Die Induktionsspule 2 auf dem Trägerarm 9 misst das Magnetfeld an der Bandkante 4, die Induktionsspule 3 das Magnetfeld an der Bandkante 5. Die Stromverteilung auf die Bandkanten 4 und 5 kann also unabhängig voneinander erfasst werden. Treten z.B. infolge Verzunderung der Rohroberfläche Widerstandsänderungen zwischen Schlitzrohr 1 und Kontaktschuh 13 bzw. 14 einseitig oder beidseitig auf, werden diese registriert.

Das Messgerät 11 enthält Grenzwertgeber für maximale und minimale Spannungen, d.h. proportionale maximale und minimale Schweissströme 15. Bei abruptem Über- oder Unterschreiten der Werte, z.B. durch Kurzschluss, wird ein Signal an eine nicht dargestellte Markiereinrichtung zur ortsgetreuen Markierung der Störstelle gegeben.

Ansonsten kann die Spannungsänderung, d.h. Schweissstromänderung für entsprechende Stellsignale zur Nachregelung des Schweissgenerators genutzt werden mit dem Ziel, konstante Schweissströme 15 zu erhalten.

## Patentansprüche

1. Verfahren zur Überwachung und/oder Regelung des Schweissstromes bei der HF-Schweissung von Längsnahtrohren durch Erfassung der durch den Schweissstrom erzeugten Magnetfelder mittels Sonden, deren Signale ausgewertet werden, dadurch gekennzeichnet, dass die Magnetfelder der Schweissströme (15) in den Bandkanten (4, 5) von der Rohrinnenseite her mit Sonden (2, 3) erfasst werden, wobei beiden Bandkanten (4, 5) je eine Sonde (2, 3) zugeordnet wird.

2. Verfahren nach Anspruch 1, dadurch gekennzeichnet, dass die erfassten Magnetfeldschwankungen gespeichert werden.

3. Verfahren nach den Ansprüchen 1 bis 2, dadurch gekennzeichnet, dass über einen vorgegebenen Sollwert hinausgehende punktuell erfasste Magnetfeldschwankungen durch Sondensignale an eine Markiereinrichtung zur ortsgetreuen Markierung des Rohres (1) gemeldet werden.

4. Vorrichtung zur Durchführung des Verfahrens nach den Ansprüchen 1 bis 3, mit einem Hochfrequenz-Schweissgenerator und konduktiver oder induktiver Stromübertragungsvorrichtung, einem Schweissstromsteller, magnetfeldempfindlichen Sonden, Messgeräten für die Sondensignale, Soll-Istwert-Vergleicher und eine Regeleinrichtung, gekennzeichnet durch zwei im Rohrinnern unmittelbar vor dem Schweisspunkt (6) unter den Bandkanten (4, 5) angeordnete Sonden (2, 3) mit in die Messgeräte (11) integrierten Grenzwertgebern.

5. Vorrichtung nach Anspruch 4 zur Durchführung des Verfahrens nach Anspruch 3, gekennzeichnet durch eine mit dem Soll-Istwert-Vergleicher gekoppelte Fehlstellenmarkiereinrichtung für das Rohr (1).

6. Vorrichtung nach den Ansprüchen 4 oder 5 für einen Hochfrequenz-Schweissgenerator mit induktiver Stromübertragungsvorrichtung zur Durchführung des Verfahrens nach den Ansprüchen 1 bis 3, gekennzeichnet durch in einem Impeder integrierte Sonden und eine den Impeder zusätzlich umschliessende Induktionsspule.

## Revendications

1. Procédé de surveillance et/ou de réglage du courant de soudage dans le soudage à haute fréquence de tubes à soudure longitudinale, par détection des champs magnétiques engendrés par le courant de soudage, au moyen de sondes dont le courant est évalué, caractérisé en ce que les champs magnétiques des courants de soudage (15) dans les bords de la bande (4, 5) sont détectés par des sondes (2, 3) depuis la face intérieure du tube, une sonde (2, 3) étant prévue pour chacun des bords (4, 5) de la bande.

2. Procédé selon la revendication 1, caractérisé en ce que les variations détectées du champ magnétique sont mises en mémoire.

3. Procédé selon les revendications 1 et 2, caractérisé en ce que des variations ponctuelles détectées du champ magnétique, dépassant une valeur de consigne prédéterminée, sont signalées par des signaux des sondes à un dispositif de marquage, afin de marquer exactement l'endroit correspondant du tube (1).

4. Dispositif pour la réalisation du procédé selon les revendications 1 à 3, comportant un générateur de soudage à haute fréquence et un dispositif transducteur de courant conductif ou inductif, un régulateur du courant de soudage, des sondes sensibles au champ magnétique, des appareils de mesure pour les signaux des sondes, un comparateur de valeur de consigne et de valeur réelle, et un dispositif de réglage, caractérisé par deux sondes (2, 3) disposées à l'intérieur du tube, en dessous des bords (4, 5) de la bande juste avant le point de soudage (6), avec des générateurs de valeurs limites intégrés aux appareils de mesure (11).

5. Dispositif selon la revendication 4, pour la réalisation du procédé selon la revendication 3, caractérisé par un dispositif de marquage des points défectueux pour le tube (1), qui est connecté au comparateur de valeur de consigne et de valeur réelle.

6. Dispositif selon les revendications 4 ou 5, pour un générateur de soudage à haute fréquence, à dispositif transducteur de courant inductif, pour la réalisation du procédé selon les revendications 1 à 3, caractérisé par des sondes intégrées à un élément d'impédance, et par une bobine d'induction entourant également l'élément d'impédance.

## Claims

1. Method for monitoring and/or regulating the welding current in the HF-welding of longitudinal-seam tubes by detecting the magnetic fields produced by the welding current by means of probes whose signals are evaluated, characterised in that the magnetic fields of the welding current (15) in the strip edges (4, 5) are detected from the inside of the tube with probes (2, 3), each strip edge (4, 5) being associated with a probe (2, 3).

2. Method according to claim 1, characterised in that the magnetic field fluctuations detected are stored.

3. Method according to claims 1 to 2, characterised in that magnetic field fluctuations detected as extending above a predetermined rated value are signalled by probe signals to a marking device, for spatially-true marking of the tube (1).

4. Apparatus for carrying out the method according to claims 1 to 3, with a high-frequency welding generator and a conductive or inductive current-transmission device, a welding current electrode, probes sensitive to magnetic fields, measuring devices for the probe signals, a rated value/actual value comparator and a regulating device, characterised by two probes (2, 3) arranged inside the tubes directly in front of the welding point (6) beneath the strip edges (4, 5), with threshold-level transducers integrated into the measuring devices (11).

5. Apparatus according to claim 4 for carrying out the method according to claim 3, characterised by a fault-position marking device for the tube (1) coupled to the rated value/actual value comparator.

6. Apparatus according to claim 4 or 5 for a high-frequency welding generator with an inductive current-transmission device, for carrying out the method according to claims 1 to 3, characterised by probes integrated into an impedor and an induction coil additionally surrounding the impedor.

Fig. 1

0 108 871

# Fig. 2